# EUROPEAN PATENT APPLICATION

(11) **EP 2 277 930 A1**
(43) Date of publication of application: **26.01.2011**
(21) Application number: 09164179.5
(22) Date of filing: 30.06.2009
(51) Int. Cl.: C08F 220/18, C08L 35/02

(54) **Radiation curable compositions**

(71) Applicant: Cytec Surface Specialties, S.A., 1070 Brussels (BE)
(72) Inventor: Miller, Chris, W., Acworth, GA 30102 (US); Waldo, Rosalyn, M., Woodstock, GA 30189 (US)
(74) Representative: Schoofs, Hilde

(57) **Abstract**

The invention relates to radiation curable compositions comprising at least one radiation curable (meth)acrylic copolymer A prepared by reacting a copolymer P obtained from copolymerizing monomers comprising (i) from 10 to 50 mole% of at least one (meth)acrylate (a1) comprising a first functional group, and (ii) from 50 to 90 mole% of at least one alkyl(meth)acrylate (a2) having at least 6 carbon atoms in the alkyl chain, with at least one (meth)acrylate (a3) comprising a second functional group which can react with the first functional group of (meth)acrylate (a1), said radiation curable (meth)acrylic copolymer A having a number average molecular weight Mn of 1000 to 23000, and their use for making inks.

## Description

The present invention relates to radiation curable compositions comprising new (meth)acrylic copolymers as well as their use for making coatings, varnishes and inks.

Radiation curable compositions comprising (meth)acrylic copolymers have been described for making inks and coatings. When used for lithographic printing, known (meth)acrylic copolymers tend to increase ink viscosity, to negatively impact ink tack and misting, while also significantly reducing cure speed, all of which limit the speed at which the printing presses can run while delivering good print quality. In addition typical radiation curable inks have a low level of adhesion to polymeric filmic substrates.

Applicants have now found new acrylic copolymers which do not present these drawbacks and which permit to prepare inks and coatings that have a combination of high reactivity, excellent adhesion to polymeric substrates, low ink tack, very low ink misting, very good printability on-press and good compatibility with the common printing equipment.

The present invention therefore relates to a composition comprising at least one radiation curable (meth)acrylic copolymer A prepared by reacting a copolymer P obtained from copolymerizing monomers comprising :
(i) from 10 to 50, preferably from 15 to 35, mole% of at least one (meth)acrylate (a1) comprising a first functional group, and
(ii) from 50 to 90, preferably from 60 to 85, mole% of at least one alkyl(meth)acrylate (a2) having at least 6 carbon atoms in the alkyl chain,
   with at least one (meth)acrylate (a3) comprising a second functional group which can react with the first functional group of (meth)acrylate (a1),
   said radiation curable (meth)acrylic copolymer A having a number average molecular weight Mn of 1000 to 23000 .

The term "(meth)acryl" used in the present invention is meant to encompass both the terms "acryl" and "methacryl".

The (meth)acrylate copolymer A preferably has a number average molecular weight Mn of at least 7000, more preferably of at least 8000. The (meth)acrylate copolymer A preferably has a number average molecular weight Mn of at most 20000, more preferably of at most 15000, most preferably of at most 12000.

The (meth)acrylate copolymer A preferably has a weight average molecular weight Mw of at least 8000, more preferably of at least 12000. The (meth)acrylate copolymer A preferably has a weight average molecular weight Mw of at most 30000, more preferably of at most 25000.

The (meth)acrylic copolymer A preferably has a polydispersity index Mw/Mn of 1.3 to 2.5, more preferably of 1.4 to 1.8. The number average molecular weight Mn and weight average molecular weight Mw are measured by GPC (in THF on a 3xPLgel 5µm Mixed-D LS 300x7.5mm column MW range 162 to 377400 g/mol calibrated with polystyrenes standards, at 40 °C).

The (meth)acrylic copolymer A preferably has a (meth)acrylate equivalent weight of from 400 to 1000 g/eq C=C.

The term "(meth)acrylate" used in the present invention is meant to encompass both acrylate and methacrylate compounds, that are compounds that comprise at least one acrylate (CH2=CHCOO-) or a methacrylate (CH2=CCH3COO-) group, as well as mixtures thereof.

The (meth)acrylate (a1) is preferably selected from epoxy(meth)acrylates, i.e. compounds having at least one (meth)acryl group and at least one epoxy group, such as glycidyl(meth)acrylate, 2-methylglycidyl(meth)acrylate and epoxycyclohexyl(meth)acrylate. The (meth)acrylate (a1) is preferably glycidyl(meth)acrylate, more preferably glycidylmethacrylate. The (meth)acrylate (a3) is preferably selected from carboxylic (meth)acrylates, i.e. compounds comprising at least one carboxylic acid group and at least one (meth)acryl group. Suitable carboxylic (meth)acrylates include (meth)acrylic acid and β-carboxyethyl(meth)acrylate. The (meth)acrylate (a3) is more preferably (meth)acrylic acid, most preferably acrylic acid.

The alkyl(meth)acrylate (a2) is preferably selected from linear and branched aliphatic alkyl(meth)acrylates, more preferably those wherein the alkyl group comprises at least 8 carbon atoms. Most preferred are aliphatic alkyl(meth)acrylates comprising not more than 24, preferably not more than 12, carbon atoms in the alkyl chain. Particularly preferred are octyl and decyl (meth)acrylates and mixtures thereof. The alkyl (meth)acrylate (a2) preferably comprises at least 50 mole% of one or more linear alkyl(meth)acrylate having from 8 to 12 carbon atoms in the alkyl chain.

Besides monomers (a1) and (a2) other copolymerisable monomers (a4) different from (a1) and (a2) may be used in mole percentages ranging from 0 to 40 mole%, preferably from 0.01 to 15 mole%, in the preparation of copolymer P. These monomers different from (a1) and (a2) may be selected from (meth)acrylates different from (a1) and (a2) or vinylic compounds. Examples of such monomers include methyl(meth)acrylate, ethyl(meth)acrylate, propyl(meth)acrylate, n-butyl(meth)acrylate, isobutyl(meth)acrylate, tert.butyl(meth)acrylate, benzyl(meth)acrylate, phenyl(meth)acrylate, hydroxyethyl(meth)acrylate, hydroxypropyl(meth)acrylate, hydroxybutyl(meth)acrylate, styrene, α-methylstyrene, vinyltoluene, (meth)acrylonitrile, vinylacetate, vinylpropionate, acrylamide, methacrylamide, methylol(meth)acrylamide, vinylchloride, ethylene, propylene, C4-20 olefins and α-olefins. Preferred monomers different from (a1) and (a2) are selected from alkyl(meth)acrylates comprising less than 6 carbon atoms in the alkyl chain.

The (meth)acrylate copolymer A is prepared by copolymerizing in a first step (meth)acrylates (a1) and (a2) and optionally one or more copolymerizable monomers (a4), so that a (meth)acrylic copolymer P comprising functional groups derived from (meth)acrylate (a1) is obtained, followed by the reaction in a subsequent step with (meth)acrylate (a3) so that the functional groups of the copolymer P react with the functional groups present on the (meth)acrylate (a3) forming a (meth)acrylic copolymer containing (meth)acrylic groups. Copolymer P may be a random, alternating or block copolymer. It is preferably a random copolymer.

The copolymerization in the first step may take place by free-radical copolymerization.

This may take place in a manner known to the skilled person by conventional methods, particularly by free-radical solution polymerization using radical initiators. Examples of suitable radical initiators include peroxides, such as benzoyl peroxide, azo compounds, such as azo-bisisobutyronitrile, and the like. The initiators may be used, for example, in amounts from 0.1 to 4.0% by weight of the starting monomers.

To achieve a good control of the molecular weight and its distribution, a chain transfer agent, preferably of the mercaptan type, such as n-dodecylmercaptan, t-dodecanethiol, iso-octylmercaptan, n-octylmercaptan or of the carbon halide type, such as carbon tetrabromide, bromotrichloromethane, can also be added in the course of the reaction. The chain transfer agent is generally used in amounts of up to 10% by weight of the monomers used in the copolymerisation.

The copolymerisation is generally carried out at a temperature of 100 to 150 °C under an inert gas atmosphere.

The reaction in the second step may take place at temperatures from 60 to 135°C without catalyst or using catalysts, for example those known to catalyze esterification through epoxy/carboxy reactions, such as chromium compounds, tertiary amines, phosphines and the like.

The relative quantity of (meth)acrylate (a3) is in general such that the equivalent ratio of functional groups present on the copolymer P obtained in the first step to the functional groups provided by the (meth)acrylate (a3) is from 0.5 to 1.0, preferably from 0.7 to 1.0, more preferably from 0.85 to 1.0.

The copolymer A can be prepared in the presence of an organic solvent.

In a first, preferred, embodiment of the invention, the copolymer A is prepared in the presence of one or more non-copolymerizable epoxide. Preferred are epoxides that do not distill out of the reaction mixture under the conditions of the free-radical polymerization.

By non-copolymerizable epoxide or epoxy compound is meant to designate in the present invention an epoxide that is essentially inert under the conditions of the free-radical copolymerization, especially that does not contain (meth)acrylic or other vinylic groups that permit the copolymerization with (meth)acrylates, especially under free-radical polymerization conditions.

In this case, the copolymer P is advantageously obtained from at least one (meth)acrylate (a1) selected from epoxy (meth)acrylates and the (meth)acrylate (a3) is preferably selected from carboxylic (meth)acrylates.

The present invention also relates to a process for the preparation of a composition according to invention comprising the copolymerization of monomers comprising :
(i) from 10 to 50 mole% of at least one (meth)acrylate (a1) selected from epoxy (meth)acrylates, and
(ii) from 50 to 90 mole% of at least one alkyl(meth)acrylate (a2) having at least 6 carbon atoms in the alkyl chain, and
(iii) from 0 to 40 mole % of at least one other monomer (a4) different from (a1) and (a2);

in the presence of at least one non-copolymerizable epoxy compound different from (a1) forming a copolymer P, and further reacting copolymer P thereby obtained with at least one (meth)acrylate (a3) selected from carboxylic (meth)acrylates.

In this embodiment of the invention, the equivalent ratio of (meth)acrylate (a3) is preferably greater than the functional groups provided by (meth)acrylate (a1) present on the copolymer P obtained in the first step so that at least part of the non-copolymerizable epoxide is co-(meth)acrylated with the copolymer P. The equivalent ratio of (meth)acrylate (a3) to the total amount of epoxy groups provided by copolymer P and non-copolymerizable epoxide is preferably from 0.5 to 1.0, more preferably from 0.7 to 1.0.

According to a first variant of this preferred embodiment, the epoxide is a compound comprising 1 to 5, preferably 1 to 3, more preferably 1 or 2, epoxy groups per molecule. The molecular weight of such compounds is preferably below 1000, more preferably below 500. The epoxides are generally selected from epoxidized olefins, glycidyl esters of saturated or unsaturated carboxylic acids, glycidyl ethers of aliphatic or aromatic polyols, and mixtures thereof. Preferred are the aliphatic monoglycidyl ethers, especially those wherein the alkyl chain comprises from 6 to 24 carbon atoms, more preferably from 8 to 18 carbon atoms. Also preferred are the glycidyl esters of saturated and unsaturated carboxylic acids, especially the glycidyl esters of long chain alkyl carboxylic acids wherein the alkyl chain comprises from 6 to 24 carbon atoms, more preferably from 8 to 18 carbon atoms. Particulary preferred are the glycidyl esters of long chain alkyl carboxylic acids wherein the alkyl chain is branched.

Examples of such compounds are glycidyl ester of neodecanoic acid (also known as Cardura®E-10P), butyl glycidyl ether, cresyl glycidyl ether, phenyl glycidyl ether, nonylphenyl glycidyl ether, p-tert-butylphenyl glycidyl ether, 2-ethylhexyl glycidyl ether, C8-10 alkyl glycidyl ethers, C12-14 alkyl glycidyl ethers. Preferred are aliphatic compounds. Particularly preferred is the glycidyl ester of neodecanoic acid.

According to a second variant of this preferred embodiment of the invention, the copolymer A is prepared in the presence of one or more epoxidized natural oils described in the second embodiment.

By epoxidized natural oil is meant to designate in the present invention any naturally occurring oil which has been modified so that it comprises at least one epoxy group. Examples of natural oils include soybean oil, linseed oil, perilla oil, fish oil, dehydrated castor oil, tung oil, coconut oil, corn oil, cottonseed oil, olive oil, palm oil, palm kernel oil, peanut oil, sunflower oil, safflower oil. Combination of oils may be used. Linseed oil, soybean oil or their mixtures are preferred. According to a third variant of this preferred embodiment of the invention, the copolymer A is prepared in a mixture of one or more epoxy compounds described in the first embodiment and one or more epoxidized natural oils described in the second embodiment.

The composition according to the present invention generally comprises at least 10 % by weight of radiation curable (meth)acrylic copolymer A, preferably at least 15 % by weight, more preferably at least 25 % by weight. The quantity of (meth)acrylated copolymer A does generally not exceed 95 %, preferably 90 %, more preferably 85 %, by weight of the composition.

The composition according to the invention may comprise at least one (meth)acrylic oligomer different from copolymer A. By (meth)acrylated oligomer is meant to designate in the present invention compounds having a number average molecular weight of from 250 to 25000 and having at the chain ends or laterally along the chains, at least one, preferably at least two, (meth)acryl groups. The average molecular weight of the (meth)acrylated oligomer preferably does not exceed 10000, more preferably not 4000.

The (meth)acrylated oligomers are generally selected from the group of polyester (meth)acrylates, polyether (meth)acrylates, epoxy (meth)acrylates, polycarbonate (meth)acrylates, urethane (meth)acrylates, (meth)acrylated (meth)acrylates different from copolymer A, amine (meth)acrylates and any combination thereof.

Polyester (meth)acrylates are well known. These (meth)acrylated polyesters can be obtained by reacting a hydroxyl group-containing polyester backbone with (meth)acrylic acid, or by reacting a carboxyl group-containing polyester backbone with a hydroxyalkyl (meth)acrylate such as for example 2-hydroxyethyl acrylate, 2- or 3-hydroxypropyl acrylate, etc. or with glycidyl methacrylate. The polyester backbone can be obtained in a conventional manner by polycondensation of at least one mono- and/or polyhydroxy alcohol, such as ethylene glycol, propylene glycol, butanediol, neopentyl glycol, hexanediol, trimethylolpropane, bisphenol A, pentaerythritol, etc, or/and the ethoxylates and/or propoxylates thereof, with at least one monoand/or polycarboxylic acid such as adipic acid, phthalic acid, isophthalic acid, terephthalic acid, trimellitic acid, etc. By using unsaturated compounds for the polyester synthesis, such as for example fumaric acid, maleic acid, itaconic acid, etc., polyesters bearing both (meth)acrylic and ethylenic unsaturations in the polymer chain, can be obtained. In addition polylactones can be used as polyester backbone. For example poly(ε-caprolactone) obtained by ring-opening polymerization of ε-caprolactone, optionally in the presence of one or more polyhydroxy alcohol, can be used. Preferred are the polyester (meth)acrylates commercialized as EBECRYL®450, EBECRYL®657, EBECRYL®860, and EBECRYL®870.

Polyether(meth)acrylates are known: they can be prepared by esterification of hydroxyfunctional polyethers with (meth)acrylic acid. Hydroxyfunctional polyethers can be obtained by ring-opening homo- or copolymerization of cyclic ethers such as tetrahydrofuran, ethylene oxide and/or propylene oxide or can be prepared by reacting polyhydroxy alcohols with ethylene and/or propylene oxide.

Polycarbonate (meth)acrylates are known. They can be prepared by esterification of hydroxyfunctional polycarbonates with (meth)acrylic acid.

Urethane (meth)acrylates are known as well. Urethane (meth)acrylates can be prepared by reacting a di- and/or polyisocyanate, such as hexamethylene-diisocyanate, isophoronediisocyanate, toluene-diisocyanate, with an hydroxyl functional (meth)acrylate. Use can be made exclusively of hydroxyl functional (meth)acrylates such as those mentioned above, but in order to extend the chain, mono- or polyhydroxy alcohols can also be added, such as those mentioned above for the synthesis of polyesters and/or polyesters, polyethers or polycarbonates containing hydroxyl groups can be added to provide, respectively, polyester urethanes, polyether urethanes, polycarbonate urethanes containing (meth)acrylic unsaturations.

Preferably, the urethane (meth)acrylates have a number molecular weight of less than 5,000. Most preferred are urethane acrylates commercialized as EBECRYL®230, EBECRYL®270 and EBECRYL®4883.

By epoxy(meth)acrylates is meant to designated the (meth)acrylic esters of epoxides, preferably polyepoxides, i.e. compounds comprising at least one, preferably at least two epoxide functions. Epoxy(meth)acrylates are generally obtained from the esterification reaction of (meth)acrylic acid with epoxides. The epoxides are generally chosen from glycidyl ethers of aromatic or aliphatic alcohols, polyols and from cycloaliphatic polyepoxides. Preferred epoxides are diglycidylethers of aromatic and aliphatic diols and cycloaliphatic diepoxides, such as diglycidyl ether of bisphenol-A, diglycidyl ether of bisphenol-F, diglycidylether of poly(ethylene oxide-copropylene oxide), diglycidylether of polypropylene oxide, diglycidylether of hexanediol, diglycidylether of butanediol. Particularly preferred is diglycidyl ether of bisphenol-A. Also epoxidized unsaturated fatty acid triglycerides or epoxidized novolacs can be used. Examples include epoxidized soya oil tri- and tetraacrylate, epoxidized castor oil triacrylate, epoxidized linseed oil tetra- and pentaacrylate, epoxidized tung (or China wood) oil tetra- and pentaacrylate.

(Meth)acrylic (meth)acrylates can be obtained by first preparing a (meth)acrylic copolymer by copolymerization of (meth)acrylic monomers such as butyl acrylate with monomers containing pendant acid, anhydride, hydroxy or glycidyl groups and by then reacting this copolymer with an unsaturated monomer. For example, a glycidyl group-containing copolymer can first be prepared by copolymerizing functionalized monomers such as glycidyl (meth)acrylate with other (meth)acrylic monomers, the said glycidyl group-containing polymer being usually reacted in a second step with (meth)acrylic acid. When the functionalized monomers are (meth)acrylic acid, the carboxyl group-containing polymer is generally reacted in the second step with glycidyl (meth)acrylate.

Preferred oligomers are polyester(meth)acrylates and epoxy(meth)acrylates.

When the compositions are used for making varnishes, especially overprint varnishes, the (meth)acrylated oligomer used in the composition according to the invention, preferably has a viscosity, measured at 25 °C according to ASTM method D-2393-80, of 300000 to 1000000, more preferably from 600000 to 1000000, cps.

When the compositions are used for making UV-litho inks, the (meth)acrylated oligomer used in the composition according to the invention, preferably has a viscosity, measured at 25 °C according to ASTM method D-2393-80, of 400 to 125000, more preferably from 400 to 75000, most preferably from 400 to 36000, cps.

When the compositions are used for making UV-litho inks, preferred (meth)acrylated oligomers are those known as presenting a low oligomer tack and/or a good pigment wetting.

The radiation curable composition according to the present invention preferably comprises at least 2 % by weight of (meth)acrylated oligomer different from copolymer A, more preferably at least 5 % by weight. The quantity of (meth)acrylated oligomer does generally not exceed 40 %, preferably not 35 %, more preferably not 30 %, by weight of the radiation curable composition. According to a preferred embodiment of the invention, the composition comprises from 2 to 20 % by weight of at least one epoxy(meth)acrylate oligomer obtained from the esterification reaction of (meth)acrylic acid with an epoxidized natural oil such as described here above in relation with the second variant of the first embodiment of the invention. As described in this first embodiment, the esterification reaction of the epoxidized natural oil preferably takes place at the same time as the reaction of the copolymer P with the (meth)acrylate (a3).

The radiation curable composition can also contain lower molecular weight (meth)acrylated monomers such as (meth)acrylic acid, beta-carboxyethyl acrylate, butyl(meth)acrylate, methyl(meth)acrylate, isobutyl (meth)acrylate, 2-ethylhexyl(meth)acrylate, cyclohexyl (meth)acrylate, n-hexyl (meth)acrylate, isobornyl (meth)acrylate, isooctyl (meth)acrylate, n-lauryl (meth)acrylate, octyl/decyl (meth)acrylate, 2-hydroxyethyl(meth)acrylate, phenoxyethyl(meth)acrylate, nonylphenolethoxylate mono(meth)acrylate, 2-(-2-ethoxyethoxy)ethyl(meth)acrylate, 2-butoxyethyl (meth)acrylate, cardura (meth)acrylate, N-vinyl pyrrolidone, 1,6-hexanediol diacrylate (HDDA), di or tri propylene glycol diacrylate (DPGDA, TPGDA), ethoxylated and/or propoxylated neopentylglycoldi(meth)acrylate, pentaerythritoltriacrylate (PETIA) and the ethoxylated and/or propoxylated derivates thereof, trimethylolpropanetri(meth)acrylate (TMPTA) and the ethoxylated and/or propoxylated derivates thereof, di-trimethylolpropanetri(meth)acrylate (diTMPTA) glyceroltri(meth)acrylate and the ethoxylated and/or propoxylated derivates thereof, bisphenol A di(meth)acrylate and the ethoxylated and/or propoxylated derivatives thereof, phenylglycidylether(meth)acrylate and the ethoxylated or/and propoxylated derivatives thereof, the (meth)acrylates obtained from the esterification of glycidyl esters of saturated and unsaturated carboxylic acids, especially the glycidyl esters of long chain alkyl carboxylic acids wherein the alkyl chain comprises from 6 to 24 carbon atoms, more preferably from 8 to 18 carbon atoms, with (meth)acrylic acid.

If low molecular weight monomers are present in the composition according to the invention, their quantity is usually from 2 to 20 %, preferably from 3 to 15 %, more preferably from 3 to 10 %, by weight.

According to a preferred embodiment of the invention, the composition comprises from 2 to 20 % by weight of at least one (meth)acrylate obtained from the esterification with (meth)acrylic acid of aliphatic monoglycidyl ethers (especially those wherein the alkyl chain comprises from 6 to 24 carbon atoms, more preferably from 8 to 18 carbon atoms) and/or of glycidyl esters of saturated and unsaturated carboxylic acids (especially the glycidyl esters of long chain alkyl carboxylic acids wherein the alkyl chain comprises from 6 to 24 carbon atoms, more preferably from 8 to 18 carbon atoms), such as described here above in relation with the first variant of the first embodiment of the invention. As described in this first embodiment, the esterification reaction of the glycidyl ethers or esters preferably takes place at the same time as the reaction of the copolymer P with the (meth)acrylate (a3).

The composition preferably comprises from 2 to 20 % by weight of at least one epoxy(meth)acrylate oligomer obtained from the esterification reaction of (meth)acrylic acid with an epoxidized natural oil and from 2 to 20 % by weight of at least one (meth)acrylate obtained from the esterification with (meth)acrylic acid of glycidyl esters of saturated and unsaturated carboxylic acids, especially the glycidyl esters of long chain alkyl carboxylic acids wherein the alkyl chain comprises from 6 to 24 carbon atoms, more preferably from 8 to 18 carbon atoms, such as described here above.

The radiation curable composition used in the process according to the invention usually also contains at least one polymerization inhibitor. Inhibitors include without limitation hydroquinone, methyl hydroquinone (THQ), monomethyl ether of hydroquinone (MEHQ), tert-butyl hydroquinone, di-tert-butyl hydroquinone, 2,6-di-tert-butyl-4-methylphenol (BHT), phenothiazine (PTZ), triphenyl antimony (TPS), oxalic acid and any mixtures thereof.

The total amount of inhibitor used is generally from 0 to 1 % by weight, preferably from 0.01 to 0.5 % by weight.

The radiation curable composition according to the invention may also comprise pigments, colorants, inert resins, fillers and/or other additives such as dispersing agents, surfactants, wetting agents, emulsifying agents, antioxidants, flow modification agents, slip agents, fire retardant agents, UV-protection agents, adhesion promoters and mixtures thereof. The total amount of pigments, colorants, inert resins, fillers and/or additives generally does not exceed 60 % by weight, preferably it does not exceed 40 % by weight.

The radiation curable composition may also comprise at least one photochemical initiator and/or chemical initiator, capable of initiating the polymerization of the radiation curable oligomer and optionally the other radiation curable compounds present therein. Photochemical initiators (also called photoinitiators) are compounds that can generate radicals by absorption of light, typically UV light. The photoinitiators are preferably free-radical photoinitiators. In some embodiments of the invention wherein the acrylated copolymer and/or the optional epoxy compound are not fully reacted, photoinitiators may also comprise cationic photoinitiators.

When cured under UV-light, curable compositions comprising at least one photoinitiator are preferred. The amount of photoinitiator or chemical initiator in the composition is preferably comprised between 0.001 and 20 wt%, more preferably between 0.01 and 10 wt%. The composition according to the invention may also comprise from 0 to 5 % by weight of one or more photosensitizers.

Alternatively, the composition can be cured in the absence of an initiator, especially by electron beam radiation.

The radiation curable compositions according to the invention present good adhesion after curing on several substrates, such as paper and nonporous substrates, especially on flexible filimic and rigid plastic substrates.

The radiation curable compositions according to the invention provides good pigment wetting. The radiation curable compositions according to the invention show a unique combination of rheology, flexibility and adhesion which permits to obtain inks and coatings showing a good pigment wetting, low ink tack, low misting and good adhesion. By inks is meant to understand liquid inks as well as paste inks.

The radiation curable composition according to the invention makes it possible to achieve together, in a single energy curable 100% solids ink composition, excellent adhesion to polymeric substrates, high reactivity, lower misting and very good lithographic printing.

The present invention further relates to a process for the manufacturing of inks, varnishes and coatings wherein a composition according to the invention as described here above is used. The present invention further relates to inks, varnishes or coatings comprising a radiation curable composition according to the invention.

The present therefore also relates to a method for making coatings and printing comprising the steps of:
(a) providing a radiation curable composition as described here above,
(b) applying said composition onto a surface, and
(c) irradiating the surface with actinic or UV radiation or electron beams.

In the method according to the invention, the compositions can be applied to the surface by any coating technique, including the spray, curtain, dip, pad and roll-coating techniques, as well as any printing technique such as lithography, letterpress, serigraphy, rotary screen, flexography, digital, gravure and inkjet printing.

The substrate to be coated or printed can be any substrate, especially paper and polymeric substrates.

The irradiation of the surface can be done by low energy electrons, actinic or UV radiation.

The composition according to the invention is particularly suitable for making inks and overprint varnishes. The invention therefore further relates to a method of printing comprising a least one step wherein a substrate is printed with an ink or varnish comprising a radiation curable composition according to invention, and curing the printed ink or varnish with actinic radiation or electron beams.

The printing can be done with any printing technology, especially with lithographic printing and flexographic printing. The compositions according to the invention are particularly suitable for making UV litho inks.

The invention also relates to the entirely or partially coated or printed substrates obtained with a printing ink, varnish or coating material comprising a radiation curable composition according to the invention.

The present invention is illustrated by the following, non-limiting examples.

### Example 1:

111.73 g of glycidylester known as Cardura E-10P and 176.61 g of epoxidized soybean oil known as Drapex 6.8 are charged to a 2L three-necked round bottom flask and mixed. The flask headspace is then purged with nitrogen while the flask contents are heated to about 130°C under gentle agitation. Monomer premix 1 is prepared by charging 860.79 g of Octyl / Decyl Acrylate (available as ODA-N from Cytec Industries, Inc.), 6.739g of N-octyl mercaptan, 204.241g of glycidyl methacrylate, 40.279 g of methyl methacrylate, 0.0662g of hydroquinone, and 15.223g of polymerization initiator (Vazo 67 available from Dupont) to a beaker, and mixed until homogenous and solids fully dissolved. Monomer premix 1 is then charged to the reaction flask dropwise via addition funnel over 3 - 4hr maintaining temperature at about 130 - 140°C. Upon completion of the addition, the reaction mixture is held at about 130 - 140°C for another 1 hr. Slow sparge with 5% Oxygen / 95% Nitrogen lean air is initiated, and 7.344 g of t-amyl peroxy-2-ethylhexanoate (TAPEH) is charged into the reaction mixture via syringe over about 3 - 5 min. The reaction mixture is held for about 45 - 60 minutes at about 130 - 140°C and then cooled to about 115°C. Hydroquinone (1.55g) is charged to the reaction flask and allowed to dissolve. Monomer premix 2 is prepared by charging 173 g of acrylic acid and 1.55 g of catalyst (Hycat OA) to an addition funnel and mixing until homogeneous. Monomer premix 2 is then charged to the reaction flask over about 1 - 2hr, maintaining temperature at about 115°C. Reaction is allowed to continue at about 115°C until the acid value of the reaction mixture is about 2mg KOH/g and percent epoxide is about 0.2%. Adjustment of stoichiometry by addition of small quantity of acrylic acid or Cardura E-10P may be performed to balance and complete the reaction. The reaction mixture is then cooled to about 60 - 80°C and recovered in storage containers.

The composition obtained was a viscous liquid with a density of about 1.1 g/ml. The composition presented a Mn of 2005 and a Mw of 15256.The acrylated acrylic copolymer had a Mn of 11147 and Mw of 21378.

### Example 2:

800 g of the composition obtained in Example 1 was mixed with 200 g of a polyester acrylate under air sparge at a temperature of 80 °C for about 1 hour.

### Example 3:

A pigment dispersion was prepared by mixing 60 wt% of the composition obtained in Example 2 with 10 wt% of propoxylated glycerol triacrylate and 30 wt% of litho rubine pigment.

### Example 4:

A UV-litho ink was prepared by mixing 60 wt% of the pigment dispersion obtained from Example 3 with 24 wt% of the composition of Example 2, 4 wt% of diacrylated monomer, 2 wt% of talc and 10 wt% of photoinitiator.

The UV ink was tested by measuring reactivity (printed on absorbent substrate and cured with a 400 watts/inch lamp), adhesion on filmic substrates, ink tack and ink misting. Ink tack was measured on a Thwing-Albert Electronic Inkometer at 1200 RPM, 90°F and 1 minute according to ASTM D 4361. Misting was measured as the total color difference as an indication of the severity of ink misting or flying. A piece of white substrate is placed beneath the bottom roller of the inkometer for the duration of the tack measurement testing. Following the tack measurement, the 4E or color difference is calculated by numerically comparing the color of the exposed substrate and a piece of unexposed substrate. A higher 4E indicates more misting. Reactivity is recorded as the minimal energy density required to achieve a mar free ink film. In this method, immediately after exposure to curing source, a finger is rubbed repeatedly across the ink film. Cure is the exposure density where there is no removal of ink onto the finger or marring of the ink surface.

Adhesion testing was performed on a variety of non porous substrates by tape test according to ASTM 3359 wit 3M's 600 and 610 tapes and Tessa's 4104 tape. Filmic substrates tested included polycarbonate, polyester, polypropylene, polystyrene and polyvinylchloride. For this testing, the ink was applied to substrates using a laboratory flat bed press and printing gage according to ASTM 6846. After curing the adhesion testing was completed.

The results obtained are presented in Table 1.

### Comparative Example 5R :

A UV-litho ink was prepared by mixing 60 wt% of a pigment dispersion comprising 60 wt% of a polyester acrylate, 10 wt% of propoxylated glycerol triacrylate and 30 wt% of litho rubine pigment, with 24 wt% of polyester acrylate, 4 wt% of diacrylated monomer, 2 wt% of talc and 10 wt% of photoinitiator.
The UV-ink was tested as in Example 4 and the results obtained are presented in Table 1.

### Comparative Example 6R:

A UV-litho ink was prepared as described in Comparative Example 5R except that the polyester acrylate was replaced with composition comprising a chlorinated polyester in 40% of acrylated monomer.
The UV-ink was tested as in Example 4 and the results obtained are presented in Table 1.

### Comparative Example 7R:

A UV-litho ink was prepared by mixing 60 wt% of the pigment dispersion described in Comparative Example 5R with 24 wt% of a composition comprising a non-acrylated acrylic copolymer diluted in 46% of acrylated monomer commercialized as EBECRYL®745, 4 wt% of diacrylated monomer, 2 wt% of talc and 10 wt% of photoinitiator. The UV-ink was tested as in Example 4 and the results obtained are presented in Table 1.

### Comparative Example 8R:

A UV-litho ink was prepared by mixing 60 wt% of the pigment dispersion described in Comparative Example 5R with 24 wt% of a diluted acrylic copolymer comprising an acrylated acrylic copolymer which does not contain an alkyl(meth)acrylate having at least 6 carbon atoms in the alkyl chain an acrylic resin, 4 wt% of diacrylated monomer, 2 wt% of talc and 10 wt% of photoinitiator.
The UV-ink was tested as in Example 4 and the results obtained are presented in Table 1.

### Example 9:

Example 4 was repeated except that the composition of Example 2 was replaced by a composition comprising 600 g of the composition of Example 1 and 400 g of polyester acrylate. The UV-ink was tested as in Example 4 and the results obtained are presented in Table 1.

### Example 10:

Example 4 was repeated except that the composition of Example 1 was replaced with a composition obtained as following: 55.7 g of glycidylester known as Cardura E-10P are charged to a 2L three-necked round bottom flask and stirred. The flask headspace is then purged with nitrogen while the flask contents are heated to about 130°C under gentle agitation. Monomer premix 1 is prepared by charging 429.163 g of Octyl / Decyl Acrylate (available as ODA-N from Cytec Industries, Inc.), 13.439 g of N-octyl mercaptan, 101.829 g of glycidyl methacrylate, 20.082 g of methyl methacrylate, 0.0290 g of hydroquinone, and 6.6 g of Vazo 67 to a beaker, and mixed until homogenous and solids fully dissolved. Monomer premix 1 is then charged to the reaction flask dropwise via addition funnel over 3 - 4hr maintaining temperature at about 130 - 140°C. Upon completion of the addition, the reaction mixture is held at about 130 - 140°C for another 1 hr. Slow sparge with 5% Oxygen / 95% Nitrogen lean air is initiated, and 3.213 g of TAPEH is charged into the reaction mixture via syringe over about 3 - 5 min. The reaction mixture is held for about 45 - 60 minutes at about 130 - 140°C and then cooled to about 115°C. Hydroquinone (0.678 g) is charged to the reaction flask and allowed to dissolve. Monomer premix 2 is prepared by charging 68.14 g of acrylic acid and 1.067 g of Hycat OA to an addition funnel and mixing until homogeneous. Monomer premix 2 is then charged to the reaction flask over about 1 - 2hr, maintaining temperature at about 121°C. Reaction is allowed to continue at about 121°C until the acid value of the reaction mixture is about 2mg KOH/g and percent epoxide is about 0.2%. The reaction mixture is then cooled to about 60 - 80°C and recovered in storage containers.
The composition obtained was a viscous liquid with a density of about 1.1 g/ml.
The UV-ink was tested as in Example 4 and the results obtained are presented in Table 1.

### Example 11:

Example 4 was repeated except that the composition of Example 1 was replaced with a composition obtained as following : 58.153 g of glycidylester known as Cardura E-10P are charged to a 2L three-necked round bottom flask and stirred. The flask headspace is then purged with nitrogen while the flask contents are heated to about 130°C under gentle agitation. Monomer premix 1 is prepared by charging 413.446 g of 2-ethylhexyl acrylate, 14.03 g of N-octyl mercaptan, 106.308 g of glycidyl methacrylate, 20.965 g of methyl methacrylate, 0.0331 g of hydroquinone, and 7.611 g of Vazo 67 to a beaker, and mixed until homogenous and solids fully dissolved. Monomer premix 1 is then charged to the reaction flask dropwise via addition funnel over 3 - 4hr maintaining temperature at about 130 - 140°C. Upon completion of the addition, the reaction mixture is held at about 130 - 140°C for another 1 hr. Slow sparge with 5% Oxygen / 95% Nitrogen lean air is initiated, and 3.672 g of TAPEH is charged into the reaction mixture via syringe over about 3 - 5 min. The reaction mixture is held for about 45 - 60 minutes at about 130 - 140°C and then cooled to about 115°C. Hydroquinone (0.774 g) is charged to the reaction flask and allowed to dissolve. 91.928 g of epoxidized soybean oil is then charged to the reaction flsk and mixed until homogeneous. Monomer premix 2 is prepared by charging 81.859 g of acrylic acid and 1.219 g of Hycat OA to an addition funnel and mixing until homogeneous. Monomer premix 2 is then charged to the reaction flask over about 1 - 2hr, maintaining temperature at about 115°C. Reaction is allowed to continue at about 115°C until the acid value of the reaction mixture is about 2mg KOH/g and percent epoxide is about 0.2%.
The reaction mixture is then cooled to about 60 - 80°C and recovered in storage containers.
The composition obtained was a viscous liquid with a density of about 1.1 g/ml.
The UV-ink was tested as in Example 4 and the results obtained are presented in Table 1.

### Example 12:

Example 4 was repeated except that the composition of Example 1 was replaced with a composition obtained as following : 56.6 g of glycidylester known as Cardura E-10P are charged to a 2L three-necked round bottom flask and stirred. The flask headspace is then purged with nitrogen while the flask contents are heated to about 130°C under gentle agitation. Monomer premix 1 is prepared by charging 273.9 g of Octyl / Decyl Acrylate (available as ODA-N from Cytec Industries, Inc.), 201.1 g of 2-ethylhexylacrylate, 10.2 g of N-octyl mercaptan, 103.4 g of glycidyl methacrylate, 20.4 g of methyl methacrylate, 0.03 g of hydroquinone, and 7.6 g of Vazo 67 to a beaker, and mixed until homogenous and solids fully dissolved. Monomer premix 1 is then charged to the reaction flask dropwise via addition funnel over 3 - 4hr maintaining temperature at about 130 - 140°C. Upon completion of the addition, the reaction mixture is held at about 130 - 140°C for another 1 hr. Slow sparge with 5% Oxygen / 95% Nitrogen lean air is initiated, and 7.344 g of TAPEH is charged into the reaction mixture via syringe over about 3 - 5 min. The reaction mixture is held for about 45 - 60 minutes at about 130 - 140°C and then cooled to about 115°C. Hydroquinone (0.8 g) is charged to the reaction flask and allowed to dissolve. 89.4 g of epoxidized soybean oil known as Drapex 6.8 are then charged to the reaction flask over 5-10 min and mixed until homogeneous. Monomer premix 2 is prepared by charging 87.6 g of glacial acrylic acid and 1.2 g of Hycat OA to an addition funnel and mixing until homogeneous. Monomer premix 2 is then charged to the reaction flask over about 1 - 2hr, maintaining temperature at about 115°C. Reaction is allowed to continue at about 115°C until the acid value of the reaction mixture is less than about 2mg KOH/g and percent epoxide is less than about 0.2%. Adjustment of stoichiometry by addition of small quantity of acrylic acid or Cardura E-10P may be performed to balance and complete the reaction. The reaction mixture is then cooled to about 60 - 80°C and recovered in storage containers. The composition obtained was a viscous liquid with a density of about 1.1 g/ml. The composition presented a Mn of 1864 and a Mw of 9240.The acrylated acrylic copolymer had a Mn of 8545 and Mw of 13677.
The UV-ink was tested as in Example 4 and the results obtained are presented in Table 1.

### Example 13:

A UV-litho ink was prepared by mixing 60 wt% of the pigment dispersion described in Comparative Example 5R with 24 wt% of the composition of Example 2, 4 wt% of diacrylated monomer, 2 wt% of talc and 10 wt% of photoinitiator.
The UV-ink was tested as in Example 4 and the results obtained are presented in Table 1.

**Table 1**

| Example | Ink tack | Ink misting | Reactivity | Tape Adhesion |
|---|---|---|---|---|
| | g-m | ΔE | mJ/m² | % |
| 4 | 19.0 | 2.5 | <75 | 100 |
| 5R | 19.3 | 3.3 | <60 | 0 |
| 6R | 14.4 | 5.0 | <60 | 0 |
| 7R | 38.9 | 17.7 | <60 | 0 |
| 8R | 13.9 | 19.4 | <60 | 0 |
| 9 | 17.0 | 2.0 | <60 | 100 |
| 10 | 14.6 | 6.4 | <60 | 100 |
| 11 | 15.9 | 2.4 | <60 | 100 |
| 12 | 13.5 | 2.0 | <60 | 100 |
| 13 | 19 | 3.1 | < 60 | 100 |

As can be seen from Table 1, the compositions according to the present invention permit to obtain inks which have lower ink tacks, less ink misting, significantly better adhesion to filmic substrates and good reactivity.

### Example 14 :

The UV ink described in example 4 was tested for its adhesion on various rigid non- porous substrates including polyester, polyethylene, polystyrene, high impact polystyrene and polyvinyl chloride according to the method described in Example 4.
The results obtained are described in Table 2.

### Example 15:

190.0 grams of the composition obtained in example 1 was blended with 10.0 grams of hydrocarbon resin for 2 hours at 102 °C. After 2 hours, this mixture was cooled to 60 °C and 20 g of a monofunctional epoxyacrylate monomer was added.

A UV-litho ink was prepared by mixing 24 wt% of this mixture with 60 wt% of the pigment dispersion described in Comparative example 5R, 4 wt % of diacrylate monomer, 2 wt % of talc and 10 wt. % of photoinitiator.

The UV ink was tested as in example 14 and the results obtained are presented in table 2.

### Example 16:

190.0 grams of the composition obtained in example 1 was blended with 20.0 grams of aldehyde resin for 2 hours at 102 °C. After 2 hours, this mixture was cooled to 60 °C and 20 g of a monofunctional epoxyacrylate monomer was added.

A UV-litho ink was prepared by mixing 24 wt% of this mixture with 60 wt% of the pigment dispersion described in Comparative example 5R, 4 wt % of diacrylate monomer, 2 wt % of talc and 10 wt. % of photoinitiator.

**Table 2**

| Example | Reactivity, | Tape Adhesion, |
|---|---|---|
| | mJ/cm2 | % |
| 14 | < 75 | 35-50 |
| 15 | < 100 | 95-100 |
| 16 | < 100 | 90-100 |

The results obtained in Table 2 show the good adhesion of the compositions on rigid plastic substrates.

### Comparative Example 17R

A UV-screen ink was made by mixing 90 wt% of a pigment dispersion containing 82.5 wt% of a composition comprising a non-acrylated acrylic copolymer diluted in 46% of acrylated monomer commercialized as EBECRYL®745, 11 wt% of 2-phenoxyethyl acrylate, 1.1 wt% of flow and leveling additive and 5 wt% of litho rubine pigment, with 5 wt% of photoinitiator, 5 wt% of amine synergist and 0.5 wt% of silica.
The UV-screen ink was tested by printing with a 355 mesh screen onto an absorbent substrate to measure reactivity. Additionally, the ink was printed onto polycarbonate, polyethylene, gycol modified polyethylene, polyester, polystyrene and polyvinylchloride substrates for adhesion testing.
The results obtained are presented in Table 3.

### Comparative Example 18R

Comparative Example 17 R was repeated except that composition commercialized as EBECRYL®745 was replaced with an epoxyacrylate commercialized as EBECRYL®3415.

### Example 19

Comparative Example 17 R was repeated except that composition commercialized as EBECRYL@745 was replaced with a composition obtained as following : 135.543 g of aliphatic glycidylether known as HELOXY^{™} Modifier 8 is charged to a 1L three-necked round bottom flask and mixed. The flask headspace is then purged with nitrogen while the flask contents are heated to about 130°C under gentle agitation. Monomer premix 1 is prepared by charging 437.247 g of Octyl / Decyl Acrylate, 3.423 g of N-octyl mercaptan, 103.747g of glycidyl methacrylate, 20.46 g of methyl methacrylate, 0.0331 g of hydroquinone, and 7.611g of Vazo 67 to a beaker, and mixed until homogenous and solids fully dissolved. Monomer premix 1 is then charged to the reaction flask dropwise via addition funnel over 3 - 4hr maintaining temperature at about 130 - 140°C. Upon completion of the addition, the reaction mixture is held at about 130 - 140°C for another 1 hr. Slow sparge with 5% Oxygen / 95% Nitrogen lean air is initiated, and 3.672 g of TAPEH is charged into the reaction mixture via syringe over about 3 - 5 min. The reaction mixture is held for about 45 - 60 minutes at about 130 - 140°C and then cooled to about 115°C. Hydroquinone (0.774g) is charged to the reaction flask and allowed to dissolve. Monomer premix 2 is prepared by charging 86.272 g of acrylic acid and 1.219 g of Hycat OA to an addition funnel and mixing until homogeneous. Monomer premix 2 is then charged to the reaction flask over about 1 - 2hr, maintaining temperature at about 121°C. Reaction is allowed to continue at about 121°C until the acid value of the reaction mixture is about 2mg KOH/g and percent epoxide is about 0.2%. Adjustment of stoichiometry by addition of small quantity of acrylic acid or Heloxy Modifier 8 may be performed to balance and complete the reaction. The reaction mixture is then cooled to about 60 - 80°C and recovered in storage containers.

**Table 3**

| Example | Reactivity | Tape Adhesion |
|---|---|---|
| | mJ/m² | % |
| 17R | 120 | 60-65 |
| 18R | 90 | 55-60 |
| 19 | 565 | 90-95 |

The results in Table 3 show the improved adhesion of the UV screen inks obtained with the compositions according to the invention over conventional UV screen inks.

## Claims

1. Composition comprising at least one radiation curable (meth)acrylic copolymer A prepared by reacting a copolymer P obtained from copolymerizing monomers comprising:
(i) from 10 to 50 mole% of at least one (meth)acrylate (a1) comprising a first functional group, and
(ii) from 50 to 90 mole% of at least one alkyl(meth)acrylate (a2) having at least 6 carbon atoms in the alkyl chain,
with at least one (meth)acrylate (a3) comprising a second functional group which can react with the first functional group of (meth)acrylate (a1),
said radiation curable (meth)acrylic copolymer A having a number average molecular weight Mn of 1000 to 23000.

2. Composition according to claim 1 wherein the radiation curable (meth)acrylic copolymer A has a (meth)acrylate equivalent weight of from 400 to 1000 g/eq C=C.

3. Composition according to claim 1 or 2 wherein the (meth)acrylate (a1) is selected from epoxy(meth)acrylates and wherein the (meth)acrylate (a3) is selected from carboxylic (meth)acrylates.

4. Composition according to any of claims 1 to 3 wherein the alkyl(meth)acrylate (a2) is selected from linear and branched aliphatic alkyl(meth)acrylates wherein the alkyl chain comprises at least 8 carbon atoms.

5. Composition according to claim 4 wherein the alkyl(meth)acrylate (a2) comprises at least 50 mole% of one or more linear alkyl(meth)acrylates wherein the alkyl chain comprises from 8 to 12 carbon atoms.

6. Composition according to any of claims 1 to 5 wherein the copolymer P is prepared by copolymerizing monomers comprising :
(i) from 15 to 35 mole% of at least one (meth)acrylate (a1),
(ii) from 60 to 85 mole% of at least one alkyl(meth)acrylate (a2), and
(iii) from 0 to 15 mole% of at least one other monomer (a4) different from (a1) and (a2).

7. Composition according to any of claims 1 to 6 comprising from 2 to 40 % by weight of at least one (meth)acrylated oligomer different from copolymer A and/or from 2 to 20 % by weight of at least one (meth)acrylated monomer.

8. Composition according to claim 7 wherein the (meth)acrylated oligomer is selected from polyester(meth)acrylates and epoxy(meth)acrylates.

9. Composition according to claim 8 wherein the epoxy(meth)acrylate is selected from (meth)acrylated epoxidized natural oils.

10. Composition according to any of claims 7 to 9 wherein the (meth)acrylate monomer is selected from the (meth)acrylates obtained from the esterification with (meth)acrylic acid of aliphatic monoglycidyl esters and/or glycidyl esters of saturated and unsaturated carboxylic acids.

11. Composition according to claim 10 wherein the (meth)acrylate monomer is obtained from the esterification with (meth)acrylic acid of glycidyl esters of long chain alkyl carboxylic acids wherein the alkyl chain comprises from 6 to 24 carbon atoms.

12. Process for the preparation of a radiation curable composition according to any of claims 1 to 11 comprising the copolymerization of monomers comprising :
(i) from 10 to 50 mole% of at least one (meth)acrylate (a1) selected from epoxy (meth)acrylates, and
(ii) from 50 to 90 mole% of at least one alkyl(meth)acrylate (a2) having at least 6 carbon atoms in the alkyl chain, and
(iii) from 0 to 40 mole % of at least one other monomer (a4) different from (a1) and (a2); in the presence of at least one non-copolymerizable epoxy compound different from (a1) forming a copolymer P, and further reacting copolymer P thereby obtained with at least one (meth)acrylate (a3) selected from carboxylic (meth)acrylates.

13. Process according to claim 12 wherein the non-copolymerizable epoxy compound is selected from glycidyl esters of saturated and unsaturated carboxylic acids and/or from epoxidized mineral oil.

14. Process for the manufacturing of inks, varnishes and coatings wherein a composition according to any of claims 1 to 11 is used.

15. Inks, varnishes or coatings comprising a radiation curable composition according to any of claims 1 to 11.
